(19) **Europäisches Patentamt**

**European Patent Office**

**Office européen des brevets**

(11) Veröffentlichungsnummer : **0 490 109 B1**

(12) # EUROPÄISCHE PATENTSCHRIFT

(45) Veröffentlichungstag der Patentschrift :
**06.04.94 Patentblatt 94/14**

(21) Anmeldenummer : **91119399.3**

(22) Anmeldetag : **14.11.91**

(51) Int. Cl.⁵ : $C01B\ 25/00$

(54) **Stabilisierter roter Phosphor sowie Verfahren zu seiner Herstellung.**

(30) Priorität : **14.12.90 DE 4039906**

(43) Veröffentlichungstag der Anmeldung :
**17.06.92 Patentblatt 92/25**

(45) Bekanntmachung des Hinweises auf die
Patenterteilung :
**06.04.94 Patentblatt 94/14**

(84) Benannte Vertragsstaaten :
**DE GB IT**

(56) Entgegenhaltungen :
**EP-A- 0 028 744**
**EP-A- 0 176 836**
**FR-A- 2 314 221**
**US-A- 4 208 317**

(73) Patentinhaber : **HOECHST**
**AKTIENGESELLSCHAFT**
**D-65926 Frankfurt (DE)**

(72) Erfinder : **Staendeke, Horst, Dr.**
**Alte Honrather Strasse 22**
**W-5204 Lohmar (DE)**
Erfinder : **Kolkmann, Friedrich, Dr.**
**Königsberger Strasse 35**
**W-5040 Brühl (DE)**

**EP 0 490 109 B1**

Jouve, 18, rue Saint-Denis, 75001 PARIS

## Beschreibung

Die Erfindung betrifft stabilisierten, pulverförmigen roten Phosphor aus Phosphorteilchen mit einer Teilchengröße von höchstens 2 mm, deren Oberfläche mit einer dünnen Schicht eines Oxidationsstabilisators bedeckt ist, sowie ein Verfahren zur Herstellung des erfindungsgemäßen Produktes.

Roter Phosphor wird bekanntlich erhalten durch thermische Umwandlung des gelben Phosphors in die stabilere rote Modifikation. Der rohe rote Phosphor mit einem Gehalt von etwa 0,5 - 1,5 Masse-% gelbem Phosphor bildet nach Beendigung der Reaktion eine kompakte Masse. Er wird unter Inertgasatmosphäre vermahlen und in wäßriger Suspension durch Kochen mit verdünnter Natronlauge vom gelben Phosphor befreit. Neuerdings wird die Umwandlung in rotierenden Reaktoren vorgenommen, wobei der rote Phosphor als Pulver anfällt. Die aus dem Reaktor entnommene wäßrige Suspension von rotem Phosphor wird in Rührgefäßen mit Dampf aufgeheizt und durch portionsweise Zugabe von Natronlauge vom Restanteil von etwa 0,1 Masse-% gelbem Phosphor befreit.

Roter Phosphor wird in der Pyrotechnik sowie bei der Herstellung von Zündholzreibflächen benötigt und findet Anwendung als Flammschutzmittel für Kunststoffe, wie z. B. Polyamide oder Polyurethane.

Bekanntlich findet in feuchter Atmosphäre an der Oberfläche von rotem Phosphor eine chemische Reaktion statt, bei der durch Oxidation und Disproportionierung verschiedene Säuren des Phosphors der Oxidationsstufen + 1 bis + 5 und Phosphorwasserstoff gebildet werden.

Es bestand somit die Aufgabe, die unzureichende Oxidationsstabilität des roten Phosphors durch Stabilisierung zu verbessern.

Hierbei wird unter dem Begriff "Stabilisierung" eine Maßnahme verstanden, die dem roten Phosphor einen besseren Schutz gegen atmosphärische Einflüsse verleiht und so z. B. bei der Lagerung oder der weiteren Verarbeitung zu einer geringeren Bildung von Oxosäuren des Phosphors und von Phosphorwasserstoff beiträgt.

Aus der DE-PS 29 45 118 (= US-PS 4,315,897) ist bekannt, daß die Oxidationsstabilität des roten Phosphors durch eine Kombination aus Aluminiumhydroxid und gehärtetem Epoxidharz verbessert werden kann, während das gehärtete Epoxidharz allein vergleichsweise unwirksam ist (vergl. DE-PS 29 45 118, Beispiele 9 und 10)

In der DE-PS 26 25 674 wird ein Flammschutzmittel für Kunststoffe beschrieben, das aus 50 - 95 % rotem Phosphor und 5 - 50 % eines ggf. gehärteten Epoxidharzes besteht. Die eingesetzten Epoxidharze fungieren hier als Träger für die Herstellung von Flammschutzmittelkonzentraten auf der Basis von rotem Phosphor. Dies ist auch an den hohen Epoxidharzkonzentrationen in den verschiedenen Beispielen erkennbar. Aus den Beispielen 1, 3 und 5 errechnet sich eine Zusammensetzung von 40 Masse-% Epoxidharz (gehärtet) und 60 Masse-% rotem Phosphor, aus Beispiel 2 eine solche aus 38 Masse-% Epoxidharz (gehärtet), 57 Masse-% rotem Phosphor und 5 Masse-% Kupferoxid. In Beispiel 8 besteht das erhaltene Granulat aus 40 Masse-% Epoxidharz und 60 Masse-% rotem Phosphor. In den Beispielen 4, 6, 7 und 9 - 11 der DE-PS 26 25 674 werden die nach den übrigen Beispielen hergestellten Konzentrate lediglich ausgeprüft.

Überraschenderweise wurde nun gefunden, daß die Oxidationsstabilität des roten Phosphors durch Aufbringen geringer Mengen eines ungehärteten Epoxidharzes verbessert werden kann. Dies ist deshalb überraschend und nicht vorhersehbar, weil durch Mikroverkapselung aufgebrachte gehärtete Epoxidharze vergleichsweise unwirksam sind (vergl. DE-PS 29 45 118, Beispiele 9 und 10).

Aus der Verminderung der Phosphorwasserstoffbildung bei Verwendung von ca. 40 Masse-% Epoxidharz gemäß DE-PS 26 25 674, welche bei der Einarbeitung in Kunststoffe beobachtet wird, kann nicht abgeleitet werden, daß dies auch bei den erfindungsgemäß verwendeten geringen Epoxidharzkonzentrationen von unter 5 Masse-% zu erwarten war. Eigentlich war zu erwarten, daß ähnlich wie bei den Beispielen 9 und 10 der DE-PS 29 45 118 keine oder nur geringe Verbesserungen der Oxidationsstabilität eintreten.

Der Effekt der Erfindung kann noch verstärkt werden, wenn nach dem Verfahren der DE-PS 34 36 161 zusätzlich noch das Phlegmatisierungsmittel Di-2-ethylhexylphthalat aufgebracht wird.

In diesem Zusammenhang wird unter dem Begriff "Phlegmatisierung" eine Maßnahme verstanden, durch die die Neigung des roten Phosphors zur Staubbildung reduziert wird, wodurch die Gefahr des Entstehens von Staubexplosionen sinkt und die Verarbeitungssicherheit steigt.

Epoxidharze (Epoxyharze) sind bereits seit langem bekannt (vergl. Römpp Chemie Lexikon, 9. Aufl., S. 1196; L. u. M. Fieser, Organische Chemie, Verlag Chemie (1965), S. 1754 f). Im Rahmen der Erfindung kommen als Epoxidharze insbesondere die Umsetzungsprodukte aus 2,2-Bis(4-hydroxyphenyl)propan (Bisphenol A) und Epichlorhydrin (Bisphenol A-Harze) und aus Bis(4-hydroxyphenyl)methan (Bisphenol F) und Epichlorhydrin (Bisphenol F-Harze) infrage, soweit sie mit Wasser emulgierbar sind oder gelöst in mit Wasser mischbaren Lösemitteln eingesetzt werden können. Bisphenol A ist seinerseits durch Kondensation von Phenol mit Aceton zugänglich, während Bisphenol F durch Kondensation von Phenol mit Formaldehyd hergestellt wird (vergl. Kunststoff Handbuch, Bd. 10 Duroplaste, Carl Hanser Verlag München Wien, 2. Auflage 1988, S. 1004 mit Kennzahlen von Epoxid-Basisharzen in Tabelle 13.2 auf S. 1005)

Im einzelnen betrifft die Erfindung nunmehr stabilisierten, pulverförmigen roten Phosphor aus Phosphorteilchen mit einer Teilchengröße von höchstens 2 mm, deren Oberfläche mit einer dünnen Schicht eines Oxidationsstabilisators bedeckt ist, welcher dadurch gekennzeichnet ist, daß der Oxidationsstabilisator ein ungehärtetes Epoxidharz ist, dessen Anteil 0,2 bis unter 5 Masse-% beträgt.

Weiterhin kann der stabilisierte, pulverförmige rote Phosphor der Erfindung wahlweise und bevorzugt dadurch gekennzeichnet sein, daß

a) er zusätzlich von einer dünnen Schicht Di-2-ethylhexylphthalat als Phlegmatisierungsmittel bedeckt ist, dessen Anteil 0,05 bis 2 Masse-%, vorzugsweise 0,3 bis 1,5 Masse-% beträgt;

b) der Anteil des Oxidationsstabilisators 0,5 bis 3 Masse-% beträgt.

Ferner betrifft die Erfindung ein Verfahren zur Herstellung des stabilisierten, pulverförmigen roten Phosphors, welches dadurch gekennzeichnet ist, daß man in eine wäßrige Suspension des roten Phosphors eine wäßrige Emulsion des Epoxidharzes oder eine Lösung des Epoxidharzes in einem mit Wasser mischbaren Lösemittel einrührt, derart, daß auf über 95 bis 99,8 Masse-Teile roten Phosphor unter 5 bis 0,2 Masse-Teile Epoxidharz kommen; daß man einen pH-Wert von 4 bis 9 einstellt, während 0,5 bis 3 Stunden bei einer Temperatur von 40 bis 80°C rührt, und schließlich die Phosphorteilchen abfiltriert und bei erhöhter Temperatur trocknet.

Schließlich umfaßt die Erfindung auch ein Verfahren zur Herstellung des stabilisierten und phlegmatisierten, pulverförmigen roten Phosphors, welches dadurch gekennzeichnet ist, daß man in eine wäßrige Suspension des roten Phosphors eine wäßrige Emulsion des Epoxidharzes oder eine Lösung des Epoxidharzes in einem mit Wasser mischbaren Lösemittel einrührt, einen pH-Wert von 4 bis 9 einstellt, während 0,5 bis 3 Stunden bei einer Temperatur von 40 bis 80°C rührt, eine wäßrige Emulsion von Di-2-ethylhexylphthalat zusetzt und während 0,5 bis 3 Stunden bei einer Temperatur von 20 bis 90°C rührt, derart, daß auf über 93 bis 99,75 Masse-Teile roten Phosphor unter 5 bis 0,2 Masse-Teile Epoxidharz und 2 bis 0,05 Masse-Teile Di-2-ethylhexylphthalat kommen; und daß man schließlich die Phosphorteilchen abfiltriert und bei erhöhter Temperatur trocknet.

Die abschließende Trocknung der abfiltrierten Phosphorteilchen kann bevorzugt bei einer Temperatur von 80 bis 120°C im Stickstoffstrom erfolgen.

Als mit Wasser mischbares Lösemittel kommen bevorzugt Aceton, Methanol oder Ethanol infrage.

Die nachfolgenden Ausführungsbeispiele und Tabellen dienen der näheren Erläuterung der Erfindung. Die Prozentangaben sind Masse-%.

Bestimmung der Oxidationsstabilität

Die Bestimmung der Oxidationsstabilität wurde nach einem Feucht/Warm-Lagerungstest durchgeführt. Hierzu wurden 5,0 g roter Phosphor (Teilchengröße: 100 % <150 μm) in eine Kristallisierschale mit einem Durchmesser von 50 mm eingewogen und die Schale in einem geschlossenen Glasgefäß bei 80°C und 100 % relativer Luftfeuchtigkeit gelagert. Der hierbei gebildete Phosphorwasserstoff wurde entweder durch einen Luftstrom (10 l/h) aus dem Glasgefäß ausgetrieben, in einer Gaswaschflasche mit 2,5 %iger Quecksilber(II)-chloridlösung zur Reaktion gebracht und die Menge der dabei entstandenen Salzsäure titrimetrisch bestimmt oder mit Hilfe eines Dräger-Röhrchens "Phosphorwasserstoff 50/a" erfaßt.

Zur Bestimmung des Gehaltes an den verschiedenen Oxosäuren des Phosphors wurde die Phosphorprobe in ein 250-ml-Becherglas übergeführt, mit 200 ml 1 %iger Salzsäure versetzt, 10 Minuten zum Sieden erhitzt und anschließend filtriert. Im Filtrat erfolgte dann die Bestimmung des säurelöslichen Phosphors nach der photometrischen Molybdato-Vanadato-Phosphorsäure-Methode.

Zur Bestimmung des Ausgangswertes an säurelöslichem Phosphor wird der rote Phosphor dem gleichen Analysenverfahren ohne vorausgegangene Feucht/Warm-Lagerung unterzogen. Dieser Wert wird dann bei der Ermittlung des Gehaltes an säurelöslichem Phosphor nach der Feucht/Warm-Lagerung in Abzug gebracht.

In den folgenden Beispielen 1 - 3 und 5 - 7 wurde als Epoxidharz ein nicht-modifiziertes, flüssiges Epoxidharz vom Bisphenol A-Typ mit einer Dichte von 1,16 g/cm³, einem Epoxid-Äquivalentgewicht von 180 bis 192 und einer dynamischen Viskosität von ca. 14 Pa . s (bei 23°C) eingesetzt, das unter dem Namen ®-Beckopox EP 140 von der Fa. Hoechst AG, Frankfurt (Main) vertrieben wird und im Technischen Merkblatt der Hoechst AG, Verkauf Kunstharze, Ausgabe November 1981, näher beschrieben ist.

Beispiel 1

500 ml einer wäßrigen Phosphorsuspension mit einem Gehalt von 250 g rotem Phosphor (Teilchengröße:

100 % <150 μm) wurden in einem Rührreaktor aus Glas mit 500 ml Wasser verdünnt und auf 60°C erwärmt. Dann wurde eine wäßrige Emulsion von 2,5 g eines unmodifizierten Epoxidharzes (®Beckopox EP 140 der Fa. Hoechst AG, Frankfurt/M.) zugesetzt. Durch Zugabe von 5 %iger Schwefelsäure wurde ein pH-Wert von 5 eingestellt; die Suspension wurde anschließend 1 Stunde bei 60°C gerührt.

Nach der Filtration wurde der Filterkuchen mit Wasser gewaschen und bei 100°C im Stickstoffstrom getrocknet. Bei der Analyse wurde ein Epoxidharzgehalt von 0,9 % ermittelt. Die Werte für die Oxidationsstabilität sind in Tabelle 1 aufgeführt.

Beispiel 2

Es wurde analog Beispiel 1 gearbeitet, wobei jedoch 5,0 g ®Beckopox EP 140 eingesetzt wurden. Bei der Analyse wurde ein Epoxidgehalt von 2,0 % ermittelt. Die Werte für die Oxidationsstabilität sind in Tabelle 1 aufgeführt.

Beispiel 3

Es wurde analog Beispiel 1 gearbeitet, wobei jedoch 7,5 g ®Beckopox EP 140 eingesetzt wurden. Bei der Analyse wurde ein Epoxidgehalt von 2,9 % ermittelt. Die Werte für die Oxidationsstabilität sind in Tabelle 1 aufgeführt.

Beispiel 4 (Vergleich)

Es wurde analog Beispiel 1 gearbeitet, wobei jedoch keine Epoxidharzemulsion zugesetzt wurde. Die Werte für die Oxidationsstabilität sind in Tabelle 1 aufgeführt.

Beispiel 5

Es wurde analog Beispiel 1 gearbeitet, wobei jedoch nach der Zugabe der Epoxidharzemulsion und Ablauf der 1-stündigen Rührzeit 5 g einer 25 %igen wäßrigen Emulsion von Di-2-ethylhexylphthalat (DOP) zugesetzt wurden; die Filtration erfolgte nach einer 30-minütigen Rührzeit bei 60°C.
Bei der Analyse wurden ein Epoxidgehalt von 1,0 % und ein DOP-Gehalt von 0,5 % ermittelt. Die Werte für die Oxidationsstabilität sind in Tabelle 2 aufgeführt.

Beispiel 6

Es wurde analog Beispiel 5 gearbeitet, wobei jedoch 5,0 g ®Beckopox EP 140 eingesetzt wurden. Bei der Analyse wurden ein Epoxidgehalt von 2,0 % und ein DOP-Gehalt von 0,5 % ermittelt. Die Werte für die Oxidationsstabilität sind in Tabelle 2 aufgeführt.

Beispiel 7

Es wurde analog Beispiel 5 gearbeitet, wobei jedoch 7,5 g ®Beckopox EP 140 eingesetzt wurden. Bei der Analyse wurden ein Epoxidgehalt von 3,0 % und ein DOP-Gehalt von 0,5 % ermittelt. Die Werte für die Oxidationsstabilität sind in Tabelle 2 aufgeführt.

Beispiel 8

Es wurde analog Beispiel 5 gearbeitet, wobei jedoch keine Epoxidharzemulsion eingesetzt wurde. Bei der Analyse wurde ein DOP-Gehalt von 0,5 % ermittelt. Die Werte für die Oxidationsstabilität sind in Tabelle 2 aufgeführt.

## Tabelle 1: Bestimmung der Oxidationsstabilität nach Feucht/Warm-Lagerung

| Beispiel | Oxidationsstabilisator | | Feucht/Warm-Lagerung bei 80°C/100 % rel. Luftfeuchte | | | |
|---|---|---|---|---|---|---|
| | Typ | Konzentration (%) | $mgPH_3/g \cdot Tag$ | Veränd.[2] (%) | $mgP^{[1]}/g \cdot Tag$ | Veränderung[2] (%) |
| 1 (Erfindung) | ®Beckopox EP 140 | 0,9 | 0,75 | -60 | 7,2 | -76 |
| 2 (Erfindung) | ®Beckopox EP 140 | 2,0 | 0,50 | -74 | 4,6 | -85 |
| 3 (Erfindung) | ®Beckopox EP 140 | 2,9 | 0,41 | -78 | 4,3 | -86 |
| 4 (Vergleich) | - | - | 1,9 | | 29,8 | |

1) Bestimmt wurde die Zunahme an säurelöslichen Phosphorverbindungen, berechnet als P.

2) Bezogen auf den roten Phosphor aus Beispiel 4 (Vergleich).

EP 0 490 109 B1

## Tabelle 2: Bestimmung der Oxidationsstabilität nach Feucht/Warm-Lagerung

| Beispiel | Oxidationsstabilisator | | Phlegmatisierungsmittel DOP[2] Konz. (%) | Feucht/Warm-Lagerung bei 80°C/100 % rel. Luftfeuchte | | | |
|---|---|---|---|---|---|---|---|
| | Typ | Konzentration (%) | | $mgPH_3$/g·Tag | Veränd.[3] (%) | $mgP^{1}$/g·Tag | Veränderung[3] (%) |
| 5 (Erfindung) | ®Beckopox EP 140 | 1,0 | 0,5 | 1,0 | -17 | 12,0 | -32 |
| 6 (Erfindung) | ®Beckopox EP 140 | 2,0 | 0,5 | 0,31 | -74 | 2,7 | -85 |
| 7 (Erfindung) | ®Beckopox EP 140 | 3,0 | 0,5 | 0,36 | -70 | 3,1 | -82 |
| 8 (Vergleich) | - | - | 0,5 | 1,2 | | 17,6 | |

1) Bestimmt wurde die Zunahme an säurelöslichen Phosphorverbindungen, berechnet als P.

2) DOP = Di-2-ethylhexylphthalat.

3) Bezogen auf den roten Phosphor aus Beispiel 8 (Vergleich).

EP 0 490 109 B1

**Patentansprüche**

1. Stabilisierter, pulverförmiger roter Phosphor aus Phosphorteilchen mit einer Teilchengröße von höchstens 2 mm, deren Oberfläche mit einer dünnen Schicht eines Oxidationsstabilisators bedeckt ist, dadurch gekennzeichnet, daß der Oxidationsstabilisator ein ungehärtetes Epoxidharz ist, dessen Anteil 0,2 bis unter 5 Masse-% beträgt.

2. Roter Phosphor nach Anspruch 1, dadurch gekennzeichnet, daß er zusätzlich von einer dünnen Schicht Di-2-ethylhexylphthalat als Phlegmatisierungsmittel bedeckt ist, dessen Anteil 0,05 bis 2 Masse-%, vorzugsweise 0,3 bis 1,5 Masse-%, beträgt.

3. Roter Phosphor nach Anspruch 1 oder 2, dadurch gekennzeichnet, daß der Anteil des Oxidationsstabilisators 0,5 bis 3 Masse-% beträgt.

4. Verfahren zur Herstellung des stabilisierten roten Phosphors nach Anspruch 1 oder 3, dadurch gekennzeichnet, daß man in eine wäßrige Suspension des roten Phosphors eine wäßrige Emulsion des Epoxidharzes oder eine Lösung des Epoxidharzes in einem mit Wasser mischbaren Lösemittel einrührt, derart, daß auf über 95 bis 99,8 Masse-Teile roten Phosphor unter 5 bis 0,2 Masse-Teile Epoxidharz kommen; daß man einen pH-Wert von 4 bis 9 einstellt, während 0,5 bis 3 Stunden bei einer Temperatur von 40 bis 80°C rührt, und schließlich die Phosphorteilchen abfiltriert und bei erhöhter Temperatur trocknet.

5. Verfahren zur Herstellung das stabilisierten und phlegmatisierten roten Phosphors nach Anspruch 2 oder 3, dadurch gekennzeichnet, daß man in eine wäßrige Suspension des roten Phosphors eine wäßrige Emulsion des Epoxidharzes oder eine Lösung des Epoxidharzes in einem mit Wasser mischbaren Lösemittel einrührt, einen pH-Wert von 4 bis 9 einstellt, während 0,5 bis 3 Stunden bei einer Temperatur von 40 bis 80°C rührt, eine wäßrige Emulsion von Di-2-ethylhexylphthalat zusetzt und während 0,5 bis 3 Stunden bei einer Temperatur von 20 bis 90°C rührt, derart, daß auf über 93 bis 99,75 Masse-Teile roten Phosphor unter 5 bis 0,2 Masse-Teile Epoxidharz und 2 bis 0,05 Masse-Teile Di-2-ethylhexylphthalat kommen; und daß man schließlich die Phosphorteilchen abfiltriert und bei erhöhter Temperatur trocknet.

6. Verfahren nach Anspruch 4 oder 5, dadurch gekennzeichnet, daß die abschließende Trocknung der abfiltrierten Phosphorteilchen bei einer Temperatur von 80 bis 120°C im Stickstoffstrom erfolgt.

**Claims**

1. Stabilized, pulverulent red phosphorus comprising phosphorus particles having a maximum particle size of 2 mm whose surface is covered by a thin coating of an oxidation stabilizer, wherein the oxidation stabilizer is an uncured epoxy resin in a proportion of from 0.2 to less than 5% by weight.

2. Red phosphorus as claimed in claim 1, which is additionally covered by a thin coating of di-2-ethylhexyl phthalate as phlegmatizing agent in a proportion of from 0.05 to 2% by weight, preferably from 0.3 to 1.5% by weight.

3. Red phosphorus as claimed in claim 1 or 2, wherein the proportion of oxidation stabilizer is from 0.5 to 3% by weight.

4. A process for the preparation of stabilized red phosphorus as claimed in claim 1 or 3, which comprises stirring an aqueous emulsion of epoxy resin or a solution of epoxy resin in a water-miscible solvent into an aqueous suspension of red phosphorus so that the proportions in the mixture are from more than 95 to 99.8 parts by weight of red phosphorus and from less than 5 to 0.2 parts by weight of epoxy resin; adjusting the pH to from 4 to 9, stirring the mixture at a temperature of from 40 to 80°C for from 0.5 to 3 hours, and finally isolating the phosphorus particles by filtration and drying at elevated temperature.

5. A process for the preparation of stabilized and phlegmatized red phosphorus as claimed in claim 2 or 3, which comprises stirring an aqueous emulsion of epoxy resin or a solution of epoxy resin in a water-miscible solvent into an aqueous suspension of red phosphorus, adjusting the pH to from 4 to 9, stirring the mixture at a temperature of from 40 to 80°C for from 0.5 to 3 hours, adding an aqueous emulsion of di-2-ethylhexyl phthalate and stirring the mixture at a temperature of from 20 to 90°C for from 0.5 to 3 hours so that the proportions in the mixture are from more than 93 to 99.75 parts by weight of red phosphorus, from less than 5 to 0.2 parts by weight of epoxy resin and from 2 to 0.05 parts by weight of di-2-ethylhexyl phthalate; and finally isolating the phosphorus particles by filtration and drying at elevated temperature.

6. A process as claimed in claim 4 or 5, wherein the final drying of the filtered-off phosphorus particles is carried out at a temperature of from 80 to 120°C in a stream of nitrogen.

**Revendications**

1. Phosphore rouge pulvérulent stabilisé constitué de particules de phosphore ayant une dimension de particule d'au plus 2 mm, dont la surface est recouverte d'une couche mince d'un stabilisant d'oxydation, caractérisé en ce que le stabilisant d'oxydation est une résine époxy non durcie dont la teneur s'élève à 0,2 à moins de 5 % en masse.

2. Phosphore rouge selon la revendication 1, caractérisé en ce qu'il est tout d'abord recouvert d'une couche mince de phtalate de di-2-éthylhexyle en tant que milieu de flegmatisation dont la teneur s'élève à 0,05 à 2 % en masse, de préférence 0,3 à 1,5 % en masse.

3. Phosphore rouge selon la revendication 1 ou 2, caractérisé en ce que la teneur en stabilisant d'oxydation s'élève à 0,5 à 3 % en masse.

4. Procédé de préparation du phosphore rouge stabilisé selon la revendication 1 ou 3, caractérisé en ce qu'on délaie, dans une suspension aqueuse de phosphore rouge, une émulsion aqueuse de la résine époxy ou une solution de la résine époxy dans un solvant miscible avec l'eau, de sorte que, pour plus de 95 à 99,8 parties en masse de phosphore rouge, on ait moins de S à 0,2 partie en masse de résine époxy, qu'on ajuste le pH à une valeur comprise entre 4 et 9, qu'on agite pendant 0,5 à 3 h à une température de 40 à 80°C et enfin qu'on sépare par filtration les particules de phosphore et qu'on les sèche à température élevée.

5. Procédé de préparation du phosphore rouge stabilisé et flegmatisé selon la revendication 2 ou 3, caractérisé en ce qu'on délaie, dans une suspension aqueuse de phosphore rouge, une émulsion aqueuse de la résine époxy ou une solution de la résine époxy dans un solvant miscible avec l'eau, qu'on ajuste le pH à une valeur comprise entre 4 et 9, qu'on agite pendant 0,5 à 3 h à une température de 40 à 80°C, qu'on ajoute une émulsion aqueuse de phtalate de di-2-éthylhexyle et qu'on agite pendant 0,5 à 3 h à une température de 20 à 90°C, de sorte que, pour plus de 93 à 99,75 parties en masse de phosphore rouge, on ait moins de 5 à 0,2 partie en masse de résine époxy et 2 à 0,05 partie en masse de phtalate de di-2-éthylhexyle ; et enfin qu'on sépare par filtration les particules de phosphore et qu'on les sèche à température élevée.

6. Procédé selon la revendication 4 ou 5, caractérisé en ce que le séchage final des particules de phosphore séparées par filtration à une température comprise entre 80 et 120°C est effectué sous un courant d'azote.